Europäisches Patentamt

European Patent Office

Office européen des brevets

(11) Veröffentlichungsnummer: **0 221 194**
**A1**

## (12) EUROPÄISCHE PATENTANMELDUNG

(21) Anmeldenummer: 85113968.3

(22) Anmeldetag: 02.11.85

(51) Int. Cl.⁴: **A01G 25/00** , **F16L 47/02**

(43) Veröffentlichungstag der Anmeldung:
**13.05.87 Patentblatt 87/20**

(84) Benannte Vertragsstaaten:
**AT CH DE FR IT LI NL**

(71) Anmelder: **Rosenberg, Gerhard**
**Am Ritterlöh 1**
**D-5952 Attendorn-Biggen(DE)**

(72) Erfinder: **Rosenberg, Gerhard**
**Am Ritterlöh 1**
**D-5952 Attendorn-Biggen(DE)**

(74) Vertreter: **Pürckhauer, Rolf**
**Friedrich-Ebert-Strasse 27 Postfach 10 09 28**
**D-5900 Siegen 1(DE)**

(54) **Rohrsystem zum Erstellen von Bewässerungsanlagen für die Landwirtschaft.**

(57) Die wesentlichen Bauelemente des Rohrsystems zum Erstellen von Bewässerungsanlagen für die Landwirtschaft sind Durchgangsrohre (2), Endrohre mit einem geschlossenen Ende bzw. Verschlußkappen (3), die am Ende einer Bewässerungsleitung (1) eingebaut werden, Schnellverschluß-Rohrkupplungen (4) zum Verbinden der Rohre (2), auf die Wasserrohre (2) aufgesetzte Anschlußstücke (5) für Sprühdüsen (6) sowie Rohrverschraubungen (7) zum Anschließen der Bewässerungsleitungen an eine Wasserleitung. Die vorgenannten Bauelemente des Rohrsystems sind aus einem schweißbaren Polypropylen-Kunststoff hergestellt, der beständig gegen hohe Temperaturen, Temperaturschwankungen und UV-Strahlen ist. Die Verbindungsmuffen (9, 11) der Rohrkupplung - (4) werden mit Hilfe eines elektrischen Handschweißgerätes auf den Rohrenden aufgeschweißt.

Fig. 1

## Rohrsystem zum Erstellen von Bewässerungsanlagen für die Landwirtschaft

Gegenstand der Erfindung ist ein Rohrsystem zum Erstellen von Bewässerungsanlagen für die Landwirtschaft, das durch Kupplungen verbindbare Wasserrohre mit Sprühdüsen umfaßt.

Als Wasserrohre für derartige Bewässerungsanlagen kommen Rohre aus Stahl oder Kunststoff zum Einsatz.

Stahlrohre sind korrosionsanfällig und wegen ihres hohen Gewichtes für den Landwirt z.B. auf dem Feld oder in einer Plantage schwer zu transportieren.

Die auf dem Markt befindlichen Bewässerungsrohre aus einem Polyvinylchlorid-Kunststoff sind zwar wegen ihres geringeren Gewichtes leichter zu transportieren als die Stahlrohre, weisen jedoch die Nachteile auf, daß sie mit Kupplungsteilen oder dgl. nur durch Kleben verbunden werden können, wozu ein besonderer Kleber erforderlich ist, und daß bei hohen Außentemperaturen in südlichen Ländern und - schlagartigen Temperaturänderungen des Kunststoffrohrmaterials durch das Einleiten von verhältnismäßig kühlem Wasser in das durch Sonneneinstrahlung aufgeheizte Rohr Wärmedehnungen und Schrumpfungen im Rohrmantel auftreten, die zu Spannungsrissen und damit zu undichten Stellen an den Klebestellen zwischen dem Rohr und beispielsweise einem Kupplungsteil sowie im Rohrmantel führen können.

Der Erfindung liegt die Aufgabe zugrunde, ein Rohrsystem zum Erstellen von Bewässerungsanlagen für die Landwirtschaft zu entwickeln, das beständig gegen äußere Witterungseinflüsse, leicht transportable und billig in der Herstellung ist.

Diese Aufgabe wird durch ein Rohrsystem mit den Merkmalen im Kennzeichen des Patentanspruchs 1 gelöst.

Das erfindungsgemäße Rohrsystem hat den Vorteil, die gestellte Aufgabe in einfacher Weise zu lösen.

Zweckmäßige Ausgestaltungen der Erfindung sind Gegenstand der Unteransprüche.

Die Erfindung mit ihren weiteren Vorteilen ist nachstehend anhand eines in der Zeichnung dargestellten Ausführungsbeispiels im einzelnen erläutert. Es zeigen

Fig. 1 eine mit dem erfindungsgemäßen Rohrsystem erstellte Bewässerungsleitung, teilweise im Schnitt, und jeweils in vergrößerter Darstellung,

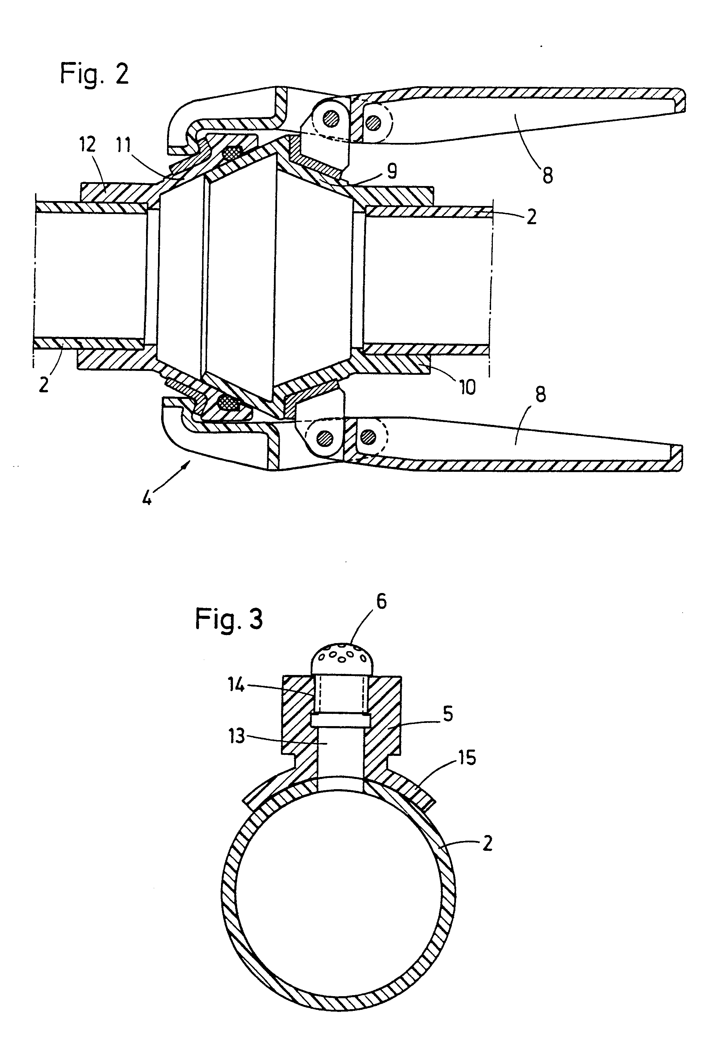

Fig. 2 einen Längsschnitt durch eine Rohrkupplung des Systems und

Fig. 3 einen Längsschnitt durch ein auf ein Rohr aufgeschweißtes Anschlußstückfür eine Sprühdüse.

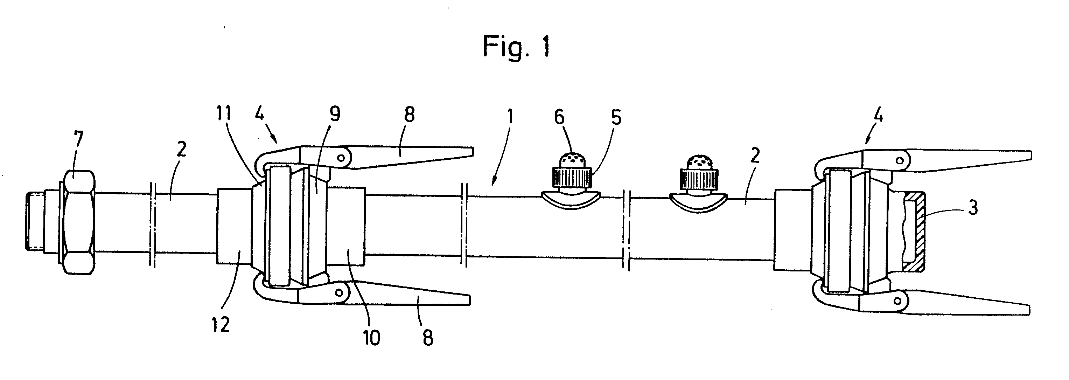

Die wesentlichen Bauelemente des Rohrsystems zum Erstellen einer Bewässerungsleitung 1 nach Fig. 1 in einer Bewässerungsanlage für die Landwirtschaft sind Durchgangsrohre 2, Endverschlußkappen 3 für die Bewässerungsleitungen 1, Rohrkupplungen 4 zum Verbinden der Rohre 2, auf die Wasserrohre 2 aufgesetzte Anschlußstücke 5 für die Sprühdüsen 6 sowie Rohrverschraubungen 7 zum Anschließen der Bewässerungsleitungen an eine Wasserleitung.

Die vorgenannten Bauelemente des Rohrsystems sind aus einem schweißbaren Polypropylen-Kunststoff hergestellt, der beständig gegen hohe Temperaturen, Temperaturschwankungen und UV-Strahlen ist.

Die Rohrkupplungen 4 sind als Schnellverschlußkupplungen mit Spannhebelverschlüssen 8 ausgebildet.

Die Schweißbarkeit des Polypropylen-Kunststoffs ermöglicht ein einfaches Anbringen der Kupplungsteile der Rohrkupplungen 4 an den Rohrenden. Das eine Ende der Durchgangsrohre 2 ist in den Anschlußstutzen 10 der Innenmuffe 9 und das andere Rohrende ist in den Anschlußstutzen 12 der Außenmuffe 11 der Rohrkupplung 4 eingesetzt, und die Rohrenden sind mit den Kupplungsmuffen 9, 11 verschweißt.

Die Kupplungsmuffen 9, 11 werden auf einfache Weise mittels eines elektrischen Handschweißgerätes, das eine Heizbuchse und einen Heizdorn aufweist, auf den Enden der Durchgangsrohre 2 und der Endrohre 3 aufgeschweißt. Zur Herstellung der jeweiligen Schweißverbindung wird zunächst das mit der entsprechenden Heizbuchse und dem entsprechenden Heizdorn ausgerüstete Schweißgerät eingeschaltet, das sich bei Erreichen einer Schweißtemperatur von ca. 245°C selbsttätig abschaltet. Anschließend wird das Rohrende, an dem die Kupplungsmuffe angebracht werden soll, in die Heizbuchse ein-und die Kupplungsmuffe mit dem Anschlußstutzen auf den Heizdorn aufgesteckt. Nach kurzzeitiger Erwärmung werden Rohrende und Kupplungsmuffe von dem Schweißgerät abgezogen, und danach wird das Rohrende in die Kupplungsmuffe eingesteckt. Nach kurzzeitiger Abkühlung kann das Rohr voll beansprucht werden.

Die Anschlußstücke 5 zum Einsetzen der Sprühdüsen 6 in die Bewässerungsrohre 2 mit einer Länge von vorzugsweise fünf Metern weisen eine Durchgangsbohrung 13 mit einem Innengewinde 14 zum Einschrauben der Sprühdüse 6 und eine entsprechend dem Rohrmantel gewölbte, sattelähnliche Konsole 15 zum Aufschweißen des Anschlußstückes 5 auf dem Rohr 2 auf, dessen Mantel nach dem Aufschweißen des Anschlußstückes 5 durch dessen Durchgangsbohrung 13 mit einem Bohrer aufgebohrt wird.

Anstatt durch Verschlußkappen können die Bewässerungsleitungen auch durch Endrohre mit einem geschlossenen Ende verschlossen werden.

Mit dem vorbeschriebenen Rohrsystem können Bewässerungsanlagen für die Landwirtschaft äußerst kostengünstig erstellt werden.

## Ansprüche

1. Rohrsystem zum Erstellen von Bewässerungsanlagen für die Landwirtschaft, mit durch Rohrkupplungen verbindbaren Wasserrohren mit Sprühdüsen, dadurch gekennzeichnet, daß Rohre (2), Kupplungsmuffen (9, 11), Sprühdüsen-Anschlußstücke (5) und Endverschlußkappen (3) für die Bewässerungsleitung (1) aus einem - schweißbaren Kunststoff bestehen.

2. Rohrsystem nach Anspruch 1, gekennzeichnet durch einen gegen hohe Temperaturen und UV-Strahlen beständigen Polypropylen-Kunststoff als Werkstoff für die Bauteile des Systems.

3. Rohrsystem nach Anspruch 1 und 2, dadurch gekennzeichnet, daß die Rohrkupplungen - (4) als an sich bekannte Schnellverschlußkupplungen mit Spannhebelverschlüssen (8) ausgebildet sind.

4. Rohrsystem nach Anspruch 3, dadurch gekennzeichnet, daß das eine Ende der Rohre (2) in den Anschlußstutzen (10) der Innenmuffe (9) und das andere Rohrende in den Anschlußstützen (12) der Außenmuffe (11) der Rohrkupplung (4) eingesetzt ist und daß die Rohrenden mit den Kupplungsmuffen (9, 11) verschweißt sind.

5. Rohrsystem nach einem der Ansprüche 1 bis 4, dadurch gekennzeichnet, daß das Anschlußstück (5) für eine Sprühdüse (6) eine Durchgangsbohrung (13) mit Innengewinde (14) zum Einschrauben der Düse (6) und eine entsprechend dem Rohrmantel gewölbte, sattelähnliche Konsole - (15) zum Aufschweißen des Anschlußstückes (5) auf dem Rohr (2) aufweist, dessen Mantel nach dem Aufschweißen des Anschlußstükkes (5) durch die Durchgangsbohrung (13) desselben aufgebohrt wird.

6. Rohrsystem nach einem der Ansprüche 1 bis 5, gekennzeichnet durch Endrohre mit einem geschlossenen Ende.

7. Rohrsystem nach einem der Ansprüche 1 bis 5, gekennzeichnet durch Endverschlußkappen - (3) für die Bewässerungsleitungen (1).

## Fig. 1

0 221 194

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 383 598 (K.L. LANNINGER) <br> * ganzes Dokument * | 1 | A 01 G 25/00 <br> F 16 L 47/02 |
| | --- | | |
| Y | DE-A-2 919 805 (CIBA-GEIGY AG) <br> * Ansprüche * | 1,3,4 | |
| A | | 2 | |
| | --- | | |
| Y | DE-U-7 803 332 (H. WIELER) <br> * Seite 7, 3. Absatz; Figuren * | 1,3,4 | |
| A | | | |
| | --- | | |
| Y | TECHNICA, Nr. 3, 1974, Seiten 185-188, Basel, CH; W. WUICH "Das Schweissen von Kunststoffen" <br> * vollständiges Dokument * | 1,4 | RECHERCHIERTE SACHGEBIETE (Int. Cl.4) <br><br> A 01 G 25/00 <br> F 16 L 47/00 <br> F 16 L 55/00 |
| | --- | | |
| A | | 2 | |
| | --- | | |
| A | DE-U-1 720 389 (BUDERUS'SCHE EISENWERKE) <br> * Anspruch, Figuren * | 5 | |
| | --- | | |
| A | US-A-4 156 504 (K.J. HEGEMANN) <br> * Figuren * | 6,7 | |
| | ---                -/- | | |

Der vorliegende Recherchenbericht wurde für alle Patentansprüche erstellt.

| Recherchenort <br> BERLIN | Abschlußdatum der Recherche <br> 24-06-1986 | Prüfer <br> WUNDERLICH J E |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 713 463 (J.W. BYWATER)<br>* Figuren * | 7 | |
| | --- | | |
| A | DE-A-2 748 512 (F.I.P.<br>FORMATURA INIEZIONE POLIMERI<br>S.P.A.)<br>* Anspruch 1; Figuren 1, 3 * | 5 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 24-06-1986 | WUNDERLICH J E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82